# EUROPÄISCHE PATENTANMELDUNG

(11) **EP 2 058 605 A2**
(43) Veröffentlichungstag der Anmeldung: **13.05.2009**
(21) Anmeldenummer: 08019233.9
(22) Anmeldetag: 04.11.2008
(51) Int. Cl.: F24J 2/46, F24J 2/52

(54) **Rahmenprofil für einen Solarkollektor**

(30) Priorität: 06.11.2007 AT 66207 U
(71) Anmelder: Solution Beteiligungs GmbH, 4642 Sattledt (AT)
(72) Erfinder: Jungreithmayr, Gerald, Ing., 4062 Thening (AT)

(57) **Zusammenfassung**

Die Erfindung betrifft ein Rahmenprofil (10) zur Fertigung von Solarkollektoren, welches an der Oberseite um ein Differenzmaß (16) größer ausgeführt ist wie an der Unterseite.

Durch die konkave Gestaltung des Profils (10) ist es möglich die Fertigung des Kollektors zu vereinfachen, da diese vollständig von der Oberseite erfolgen kann.
Das Rahmenprofil (10) kann bei unterschiedlichen Montagemöglichkeiten (Auf-Dach, In-Dach oder Fassade) einheitlich verwendet werden.
Mit den Funktionen und der Ausführungsform wird durch das Profil (10) eine Leistungssteigerung des Kollektors bewirkt, das der Einstrahlwinkel (β) auf den Absorber verbessert ist, die Transmissionsfläche der Abdeckung (20) wesentlich größer zur Reflexionsfläche (oben sichtbarer Profilanteil) ist.
Durch eine glatte, bündige Oberfläche am Kollektor wird die Ablagerung von Schmutz, Laub oder Schnee verhindert.

## Beschreibung

Die Erfindung betrifft ein Rahmenprofil zur Herstellung eines Solarkollektors zur Nutzung der Sonnenenergie.
Durch die erfindungsgemäße Ausgestaltung des Profils nach dem Anspruch 1 und den folgenden, abhängigen Ansprüchen werden zahlreiche Funktionen in einem Profil integriert und dadurch der Fertigungs- und Montageaufwand verringert, sowie gleichzeitig die Produkteigenschaften des daraus hergestellten Kollektors wesentlich verbessert.

Zur Herstellung von Solarkollektoren werden nach dem Stand der Technik meist C-förmige Rahmenprofile verwendet, die nach der Winkelverbindung einen innen offenen Rahmen bilden, um die entsprechenden Bauteile (Isolierung, Absorber, Abdeckglas) aufzunehmen. Durch notwendige Anschlüsse an der Außenseite für Wasserein- und Wasserrücklauf, bzw. zur Verbindung der Kollektoren untereinander und zur Befestigung der Profile auf einer entsprechenden Tragkonstruktion meist über Schraubverbindungen, ist zwischen mehreren Modulen ein entsprechender Abstand notwendig.
Dieser Abstand zwischen den Solarmodulen ergibt in Bezug auf die Gesamtfläche weniger effektive Fläche aus der Solarenergie gewonnen werden kann. Zudem kann sich in den Hohl- und Zwischenräumen Schmutz, Laub, im Winter Schnee etc. sammeln, was letztendlich auch auf der Kollektoroberfläche zum Liegen kommt und die Leistungsfähigkeit weiter schmälert.
Weiters ist bei derartigen Profilen der Einfallwinkel der Sonnenstrahlung auf die am Rand zum Profil hin liegenden Absorberrohre ungünstig, da diese unmittelbar unterhalb des Randes der Abdeckung zum Liegen kommen und nur bei einem optimalen Einstrahlwinkel von 90° mit Sonnenenergie versorgt werden.

Ein weiterer Schwachpunkt von Kollektoren mit einem C-förmigen Rahmenprofil ist die Durchführung der Medienleitungen. Diese werden zwar mit einer Dichtung versehen, speziell bei steilen Dächern und damit einem flachen Winkel des Rahmenprofils an der Oberseite des montierten Kollektorrahmens (ergibt sich durch einen steil montierten Kollektor) kann Wasser nur schwer abfließen und somit langsam durch die Dichtung eindringen, was Kondensation an der Glasabdeckung und damit einen wesentlichen Leistungsverlust verursacht. Dies kommt speziell bei fertig vormontierten Kollektoren mit am oben liegenden Rahmenprofil durchgeführten Anschlüssen zum Tragen, wie dies bei mehreren vorgefertigten und miteinander verbundenen Modulen beispielsweise zur raschen Kranmontage eingesetzt wird.

Die Montage der Profile auf dem Dach oder an der Fassade wird meist mit speziellen Lösungen für genau eine Befestigungsmöglichkeit gelöst, was sich in vielen Ausführungsvarianten und damit höheren Kosten des Kollektors niederschlägt. Für unterschiedliche Befestigungsmöglichkeiten werden heute teilweise unterschiedliche Rahmenprofile des Kollektors vorgesehen.

Durch die C-förmigen Profile ist weiters eine aufwendige Fertigung der Kollektoren gegeben, da meist zumindest die Deckglasscheibe seitlich eingeschoben werden muss, was erhöhten Platz- und Arbeitsaufwand bedeutet.
Ebenso kann durch das notwendige Einschieben die Verbindung der Rahmenprofile untereinander erst nach erfolgter Fertigung erfolgen.

Ziel der Erfindung ist es diese Mängel zu beseitigen und sowohl eine einfache und kostengünstige Fertigung, wie auch eine gute Montagemöglichkeit des fertigen Kollektors bei verschiedenen Bausituationen (Auf-Dach manuell oder mittels Kran, In-Dach oder an der Fassade) zu ermöglichen.
Die Montage soll möglichst einfach mit wenigen Schrauben und einheitlichen Werkzeugen erfolgen können.
Ebenso sollen die aufgezeigten Schwachpunkte des Solarkollektors verbessert und damit die Leistungsausbeute gesteigert werden.

Gelöst wird diese Aufgabe durch ein erfindungsgemäßes Rahmenprofil, welches im Querschnitt konkav nach außen läuft und damit im Einsatz als Rahmen an der Oberseite außen größere Abmessungen zeigt, wie an der Unterseite.

Die Erfindung wird an den folgenden Figuren beschrieben.
Fig. 1 zeigt den Querschnitt eines erfindungsgemäßen Profils.
Fig. 2 zeigt ausschnittsweise den Querschnitt eines Kollektors mit dem erfindungsgemäßen Profil, sowie der Befestigungssituation für die Auf-Dach Montage.
Fig. 3 zeigt die Verwendung des Profils für eine Fassadenmontage.

Es werden für gleichartige Bauteile, bzw. Funktionselemente gleiche Bezugszeichen verwendet. Lagebezeichnungen wie oben, unten, schräg etc. beziehen sich auf die einzelnen Figuren und sind bei einer Lageänderung sinngemäß zu übertragen.
Die Oberseite bezeichnet den der Sonne zugewandten Teil des Profils, während die Unterseite dem Dach oder der Fassade zugewandt ist.

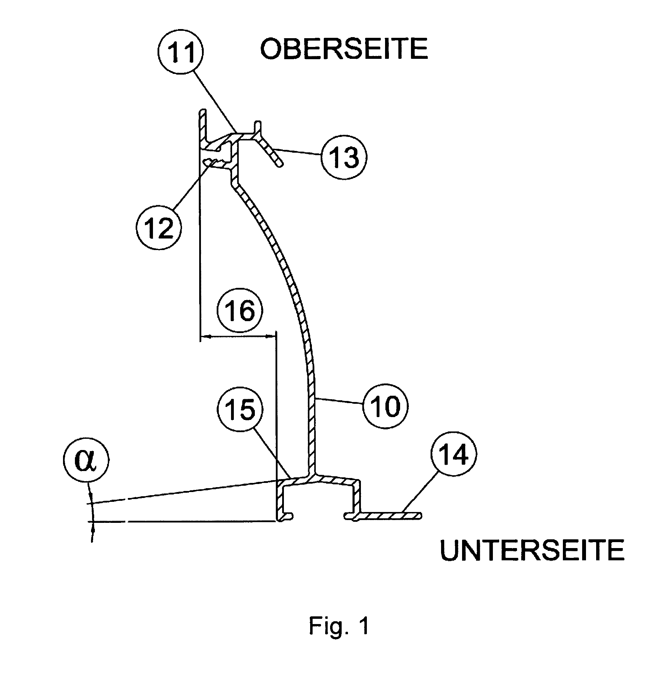

Das in Figur 1 dargestellte Kollektorprofil (10) ist derart ausgeführt, dass es im Einsatz als Kollektorrahmenprofil an der Oberseite eine größere Außenabmessung aufweist, wie an der Unterseite. Die Außenabmessung ist an der Oberseite um das Differenzmaß (16) größer.
Für den Einsatz als Solarkollektorrahmenprofil werden 4 Profile (10) mit 45° auf Gehrung geschnitten und rechtwinkelig miteinander verbunden. Die Verbindung kann mittels Schweißen, Kleben, Löten, Schrauben, Nieten oder mit Hilfe von so genannten Montageeckverbindern ausgeführt sein.
Der konkave Verlauf des Rahmenprofils (10) nach Außen ermöglicht für die Kollektorbefestigung welche im unteren Bereich des Kollektorprofils erfolgt wesentlich mehr Platz, wie bei herkömmlichen C-förmigen Profilen. Dieser zusätzliche Bauraum ist als Maß (16) in der Figur 1 dargestellt. Somit können mehrere Kollektoren entsprechend ohne Spalt an der Oberseite des Kollektorrahmens montiert werden.
An einer Seite des Rahmens sind neben den Befestigungselementen (30, 40) auch Verbindungsleitungen der Absorber (70) untereinander anzubringen. Der dafür notwendige Platz erfordert einen geringen Spalt, der zusätzlich mit einer Abdeckleiste (60) abgedeckt werden kann, die schraubenlos durch den Klemmsteg (12) mit dem Kollektorprofil (10) verbunden wird.
Durch den wesentlich geringeren Spalt gegenüber Kollektoren nach dem Stand der Technik steht auf der Gesamtfläche mehr Absorberfläche zur Verfügung.

Der Verlauf des Profils (10) im Querschnitt kann durch jede beliebige mathematische Funktion beschrieben werden. So ist im einfachsten Fall ein linearer Verlauf nach außen möglich. Vorteilhaft erfolgt die Erweiterung nach oben mittels einem konkaven Verlauf, beschrieben durch einen Kegelschnitt, beispielsweise ein Teil einer Ellipse, Hyperbel oder Parabel.
Durch den konkaven Verlauf können die erfindungsgemäßen Merkmale bei entsprechend großer Absorberfläche am besten umgesetzt werden.

Die Außenabmessungen des Profils (10) je Seitenlänge sind an der Oberseite um das Maß (16) größer wie an der Unterseite. Das Differenzmaß (16) hat zwischen 5 und 50 mm, vorzugsweise zwischen 13 und 25 mm.
Wird die Differenz (16) kleiner wie 5 mm gewählt steht kaum mehr Platz für die Montage des Kollektors zur Verfügung und auch andere Erfindungsmerkmale, wie die integrierten Klemmstege (12, 13), die Klebenut (11), oder der konische Befestigungssteg (15) können damit nur mangelhaft ausgeführt werden.
Eine Differenz größer 50 mm bedeutet insgesamt eine zu geringe Absorberfläche zur Gesamtfläche des Kollektors, was sich wiederum negativ auf die Leistungsfähigkeit auswirkt.

Durch die Möglichkeit mehrere Kollektoren ohne Spalt, bzw. mit einer Abdeckleiste (60) zu verbinden, ergibt sich eine ebene Oberfläche über mehrere Kollektoren, die keinerlei Angriffsfläche für die Ansammlung von Schmutz, Laub, Schnee und dergleichen bietet.

Die glatte, bündige Oberfläche am Kollektor selbst ergibt sich durch die sichtbare Verklebung der Abdeckscheibe (20) des Kollektors in der Klebenut (11) des Rahmenprofils. Im Gegensatz zu Scheiben, die in C-förmige Profile eingeschoben werden ergibt sich hier eine absolut bündige Oberfläche.
Neben der bündigen Oberfläche wird durch die Verklebung die Statik des Kollektors wesentlich erhöht, da nicht nur das Rahmenprofil (10) mit der verbundenen Bodenplatte Kräfte aufnimmt, sondern auch die Abdeckung (20).

Weiters ist es durch die Verklebung der Abdeckung möglich, die Fertigung des Kollektors wesentlich zu vereinfachen.
Ausgehend von den 4 fertig verbundenen Rahmenprofilen (10) wird die Bodenplatte des Kollektors von oben eingebracht und am Steg (14) des Profils mit diesem verbunden.
Die Randisolierung des Kollektors wird in dem Klemmsteg (13) gehalten, sodass hierfür lediglich die 4 Isolierstreifen eingelegt werden ohne diese zusätzlich im Rahmen befestigen zu müssen. Im oberen Bereich wird die Isolierung durch den Klemmsteg (13) gehalten, während an der Unterseite über die Bodenplatte eine Isoliermatte eingelegt wird, die die Randisolierung klemmt.

Der Klemmsteg (13) kann beim Einsatz von Winkeleckverbindern ebenso als Aufnahme und Fixierung für diese dienen.
Anschließend wird der Absorber mit den Absorberrohren (70) von oben eingelegt und die Abdeckplatte (20) in der Klebenut (11) bündig verklebt. Der Kleber ist in der Abbildung nicht dargestellt, füllt aber die Klebenut (11) aus und erzeugt damit eine absolut plane und bündige Fläche zwischen Abdeckscheibe (20) und Profil (10).

Da die Profile (10) bereits zu einem Rahmen vorkonfektioniert sein können und alle anderen Bauteile von oben in den Rahmen eingelegt werden, ergibt sich ein geringer Arbeitsraum für die Fertigung des Kollektors.

Durch den bündigen Abschluss der Abdeckplatte (20) mit dem obersten Punkt des Rahmenprofils (10) ergibt sich eine große transparente Fläche, die absolut bündig mit dem Rahmenprofil abschließt und somit verhindert, dass sich Laub, Schmutz und Schnee an der Kollektoroberfläche ablagern. Ebenso ist ein ungehinderter Abfluss des Regenwassers möglich.
Weiters ist durch den geringen, von oben sichtbaren Profilanteil der Grad an reflektierter Sonnenstrahlung wesentlich geringer und ein Großteil der Energie kann durch die Abdeckung (20) transmittieren. Durch die Verklebung der Abdeckung (20) ist es möglich, dass nur die Wanddicke des Profils (10) sichtbar ist und somit einen wesentlich geringeren Reflexionsanteil besitzt, wie bei C-förmigen Rahmenprofilen.

Die Abdeckung (20) des Kollektors kann aus Glas, aber auch aus Kunststoff, beispielsweise Polycarbonat oder Polymethylmetacrylat, sowie anderen transparenten Kunststoffen bestehen.

Die Profile (10) können aus Stahl, Aluminium oder Kunststoff bestehen.
Beim Einsatz von Aluminium, was gegenüber Stahl den Vorteil des geringeren Gewichts bedeutet werden vorzugsweise stranggepresste Profile eingesetzt, die je nach Oberflächenanforderung eloxiert sein können.
Beim Einsatz von Kunststoff werden vorzugsweise faserverstärkte Werkstoffe eingesetzt, die durch Extrusion oder Pultrusion hergestellt werden. Als Faserwerkstoffe kommen Glas-, Aramid- oder Kohlefasern in Frage, die in eine thermoplastische oder duromere Matrix eingebettet sind.

Durch die konkave Ausgestaltung des Profils (10) ist es möglich dass der Absorber (70), der sich im Randbereich des Kollektors befindet mit einem wesentlich günstigeren Einfallwinkel (β) mit der Sonnenenergie versorgt wird.
Bei C-förmigen Profilen nach dem Stand der Technik ist im günstigsten Fall der Absorber direkt unter dem Profil, also mit einem Einfallwinkel (β) von 90° angebracht.

Das erfindungsgemäße Profil (10) ist derart ausgeführt, dass der Einfallwinkel (β) zwischen 60 und 85°, vorzugsweise zwischen 70 und 80° liegt was eine wesentliche Effizienzsteigerung des Kollektors ermöglicht.
Ein noch geringerer Winkel (β) scheint auf den ersten Blick erstrebenswert, jedoch würde dadurch der ungenutzte Zwischenraum zwischen den Modulen sehr groß und die effektive Absorberfläche zu gering, wodurch sich der gewählte Winkel zwischen 70 und 80° als optimaler Kompromiss zwischen Absorberfläche, sich ergebenden Zwischenraum und Platzbedarf für Anschlüsse und Kollektorbefestigung erwiesen hat.
Ein flacher Einstrahlwinkel (β) ist speziell bei ungünstigen Sonneneinstrahlwinkeln, wie morgens, abends, aber auch die den Übergangszeiten wie Frühjahr und Herbst, sowie bei Bauten, wo durch die Montagesituation die Kollektoren nicht nach Süden ausgerichtet werden können von großem Vorteil.

Die Anschlüsse des Absorbers (70) für den Vor- und Rücklauf des Temperiermediums werden typischerweise durch die Rahmenprofile (10) in der oberen Profilhälfte hindurch geführt. Durch die konkave Ausgestaltung des Profils (10) kann im verbauten Zustand durch die konkave Geometrie Regenwasser schneller abfließen, wie bei einer geraden Fläche eines herkömmlichen Profils. Dadurch wird die Möglichkeit des Eindringens von Wasser in den Kollektor gegenüber heutigen Lösungen mit einer Dichtung, die auch hier verwendet wird nochmals verbessert.
Selbst geringe Mengen an Wasser können nicht mehr durch die Dichtung eindringen, da das Wasser rasch abfließt und somit ein Eindringen von Wasser, verbunden mit einer Kondensatbildung und einem Beschlagen der Abdeckung zuverlässig vermieden werden kann.

Die Befestigung des Kollektors mit dem Profil (10) kann Auf-Dach (Dacheindeckung bleibt vorhanden), In-Dach (direkte Befestigung an der Unterdachkonstruktion) oder an einer Fassade erfolgen.
Die Befestigung Auf-Dach kann händisch erfolgen, sodass die einzelnen Module einzeln auf das Dach befördert und nacheinander montiert werden. Ebenso ist es möglich mehrere Module bereits in der Produktion miteinander zu verbinden und gleichzeitig mittels Kran auf das Dach zu heben und zu montieren, was den Montageaufwand deutlich reduziert.
Für eine Kranmontage kann mit dem gleichen Befestigungsmaterial gearbeitet werden, sodass kein zusätzliches Befestigungsmaterial notwenig ist, die gleichen Werkzeuge verwendet werden und eine einheitliche Lagerhaltung möglich ist.

Neuartig an den unterschiedlichen Befestigungsmöglichkeiten ist, dass diese mit einem einzigen, einheitlichen Rahmenprofil (10) möglich sind.

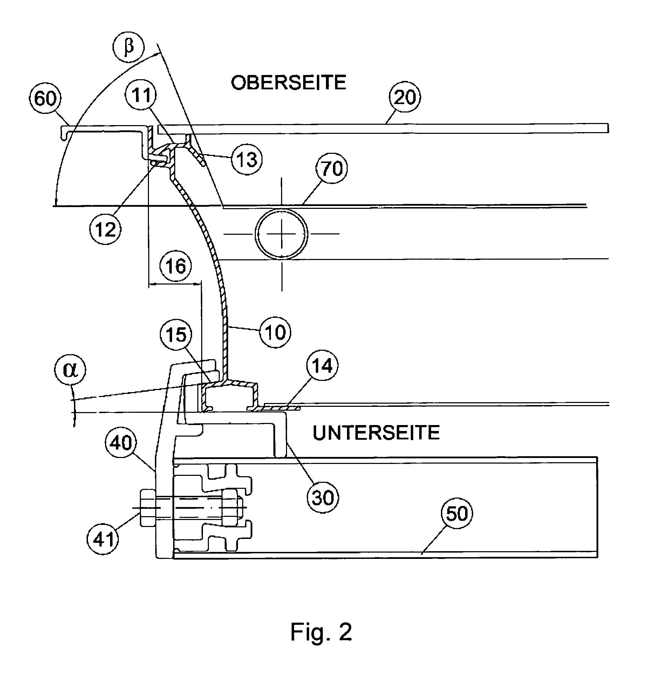

Eine entsprechende Befestigungssituation Auf-Dach ist in der Figur 2 dargestellt. Dazu wird vorzugsweise eine Befestigungsleiste (30) über den konischen Befestigungssteg (15) formschlüssig mittels Befestigungsdornen (40) am Formrohr (50) fixiert.
Durch die konische Gestaltung des Befestigungssteges (15) ist es möglich ohne Schraube eine sichere, formschlüssige Verbindung zu realisieren. Für eine optimale Verbindung wird der Konus mit einem Winkel (α) zwischen 2 und 15°, vorzugsweise zwischen 5 und 10° ausgeführt.
Der Konus ermöglicht hohe Fertigungstoleranzen und somit eine kostengünstige Fertigung, da durch den Winkel (α) immer eine sichere Klemmung gegeben ist.

Das Formrohr (50) ist etwas kürzer abzulängen, wie die sich ergebende Länge, um eine sichere Klemmung der Befestigungsleiste (30) am Befestigungssteg (15) zu ermöglichen. Die Klemmung erfolgt mit Befestigungsdornen (40), welche über eine Spannschraube (41) im Formrohr (50) verklemmt werden.
Dadurch ist eine Montage mit nur einer Schraube (41) pro Befestigungsdorn (40) am Dach möglich, was einen erheblich reduzierten Arbeitsaufwand bedeutet.

Die einheitliche Lösung zur Befestigung an Formrohren (50), ist auf jeder beliebigen Dacheindeckung und Neigung verwendbar.

Die unterschiedliche Befestigung des Formrohrs (50) am Dach erfolgt je nach Dacheindeckungsart (Ziegel, Blech, Eternit, ...) mit bekannten Elementen und wird hier nicht näher erläutert, da dies dem Stand der Technik entspricht.

Weiters können mit der erfindungsgemäßen Ausgestaltung des Profils (10) mit dem konischen Klemmsteg (15) auch einfache Lösungen zur Befestigung im Dach oder an der Fassade verwendet werden und das Kollektorprofil (10) einheitlich für alle Montagemöglichkeiten eingesetzt werden.

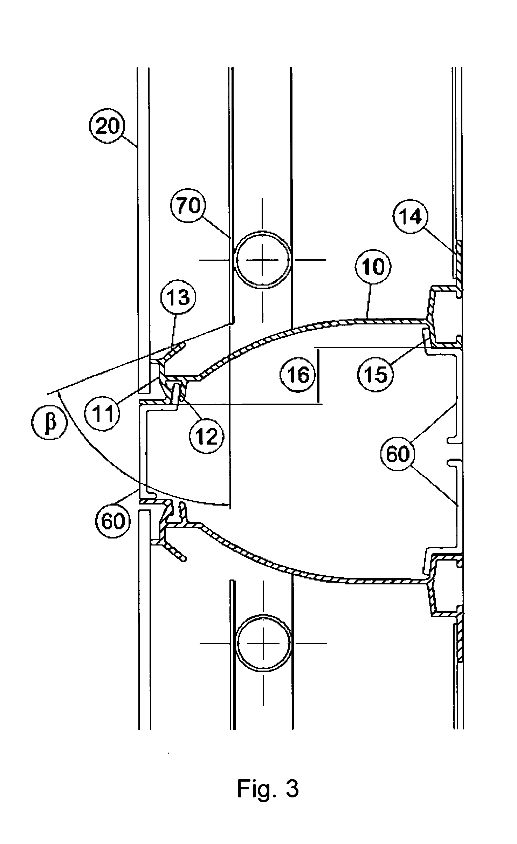

Eine Fassadenbefestigung ist in Figur 3 dargestellt.
Hier wird der Klemmsteg (15) mit dem Konus zur formschlüssigen Befestigung mit dem Fassadenbefestigungsprofil (60) verwendet. Auch bei dieser Montageart ist nur eine Schraubenart notwendig, mit der die Befestigungsleiste (60) an der Fassade befestigt wird. Der für die Anschlüsse notwendige Abstand zwischen mehreren Modulen kann mit den gleichen Profil (60) erfolgen, indem dieses als Abdeckprofil (60) im Klemmsteg (12) eingeschoben wird und eine vollkommen ebene Oberfläche ohne störende Zwischenräume ergibt.

Neben der bereits beschriebenen Verbesserung hinsichtlich Verschmutzung ergibt sich insbesondere im Fassadenbereich durch die geschlossene homogene und bündige Oberfläche auch eine geringere Verletzungsgefahr und leichte Reinigungsmöglichkeit.

### Durch die erfindungsgemäße Gestaltung des Profils (10) ist es somit möglich:

Erstens die Fertigung des Kollektors zu vereinfachen und zu vereinheitlichen; Zweitens eine einfache, sichere und einheitliche Montagemöglichkeit bei unterschiedlichen Baugegebenheiten (Auf-Dach, In-Dach oder Fssade) zu ermöglichen und
Drittens die Leistungseffizienz des Kollektors zu steigern, was der Aufgabenstellung der Erfindung entspricht.

Das dazu entwickelte Rahmenprofil (10) ist in Anspruch 1 und den folgenden, abhängigen Ansprüchen beschrieben.

### Bezugszeichenaufstellung:

- 10: Rahmenprofil
- 11: Klebenut
- 12: Klemmsteg für Abdeckprofil
- 13: Klemmsteg für Randisolierung
- 14: Befestigungssteg für die Bodenplatte
- 15: Befestigungssteg für die Befestigungsleiste
- 16: Differenz Oberseite zu Unterseite
- 20: Kollektorabdeckung
- 30: Befestigungsleiste
- 40: Befestigungsdorn
- 41: Spannschraube
- 50: Formrohr
- 60: Abdeckprofil / Fassadenbefestigungsprofil
- 70: Solarabsorber
- α: Konuswinkel des Befestigungsstegs
- β: Einstrahlwinkel auf den Absorber

## Patentansprüche

1. Profil (10), welches aus 4 in Gehrung geschnittenen, miteinander verbunden Profilen (10) einen Rahmen für einen Solarkollektor ergibt, **dadurch gekennzeichnet, dass** das Profil (10) eine zur Oberseite nach außen laufende Geometrie aufweist, die an der Oberseite eine um das Differenzmaß (16) größere Abmessung ergibt, wie an der Unterseite.

2. Profil (10) nach Anspruch 1, **dadurch gekennzeichnet, dass** das Differenzmaß (16) zwischen 5 und 50 mm, bevorzugt zwischen 13 und 25 mm liegt.

3. Profil (10) nach Anspruch 1 oder 2, **dadurch gekennzeichnet, dass** der Verlauf konkav ist und durch die Geometrie eines Kegelschnittes beschrieben wird.

4. Profil (10) nach Anspruch 1, 2 oder 3, **dadurch gekennzeichnet, dass** die Krümmung nach oben hin stärker verläuft.

5. Profil (10) nach mindestens einem der Ansprüche 1 bis 4, **dadurch gekennzeichnet, dass** durch die Profilgeometrie der Einfallstrahlwinkel (β) der Sonnenstrahlen auf den Absorber (70) zwischen 60 und 85°, vorzugsweise zwischen 70 und 80° liegt.

6. Profil (10) nach mindestens einem der Ansprüche 1 bis 5, **dadurch gekennzeichnet, dass** an der Profilgeometrie eine Klebenut (11) für die Befestigung der Abdeckscheibe (20) vorgesehen ist.

7. Profil (10) nach mindestens einem der Ansprüche 1 bis 6, **dadurch gekennzeichnet, dass** sich im verklebten Zustand zwischen Oberkante des Profils (10) und Abdeckscheibe (20) eine bündige, ebene Fläche ergibt.

8. Profil (10) nach mindestens einem der Ansprüche 1 bis 7, **dadurch gekennzeichnet, dass** am Profil ein Klemmsteg (12) zur schraubenlosen Befestigung eines Abdeckprofils (60) vorgesehen ist.

9. Profil (10) nach mindestens einem der Ansprüche 1 bis 8, **dadurch gekennzeichnet, dass** die Befestigung des Kollektors über einen konischen Befestigungssteg (15) formschlüssig erfolgt.

10. Profil (10) nach mindestens einem der Ansprüche 1 bis 9, **dadurch gekennzeichnet, dass** der Konuswinkel (α) des Befestigungsstegs (15) zwischen 2 und 15°, vorzugsweise zwischen 5 und 10° beträgt.

11. Profil (10) nach mindestens einem der Ansprüche 1 bis 10, **dadurch gekennzeichnet, dass** bei der Montage des Kollektors keine Schrauben in das Profil (10) eingeschraubt werden.

12. Profil (10) nach mindestens einem der Ansprüche 1 bis 11, **dadurch gekennzeichnet, dass** der Klemmsteg (12) und der Befestigungssteg (15) derart ausgeführt und dimensioniert sind, dass für die Befestigung an der Fassade das Abdeckprofil (60) auch als Befestigungsprofil verwendet werden kann.

13. Profil (10) nach mindestens einem der Ansprüche 1 bis 12, **dadurch gekennzeichnet, dass** das Profil (10) für die Kollektorfertigung als Rahmen fertig verbunden ist und alle Teile des Kollektors (Isolierung, Absorber (70) und Abdeckscheibe (20)) von oben eingebaut werden können.

14. Profil (10) nach mindestens einem der Ansprüche 1 bis 13, **dadurch gekennzeichnet, dass** die Montage bei allen Baugegebenheiten (Auf-Dach, In-Dach oder Fassade) mit dem gleichen Profil (10) über den konischen Befestigungssteg (15) formschlüssig erfolgt.

15. Profil (10) nach mindestens einem der Ansprüche 1 bis 14, **dadurch gekennzeichnet, dass** dieses aus Aluminium gefertigt ist und gegebenenfalls eloxiert ausgeführt ist.

16. Profil (10) nach mindestens einem der Ansprüche 1 bis 15, **dadurch gekennzeichnet, dass** dieses aus Kunststoff, optional aus faserverstärktem Kunststoff gefertigt ist.
